# EUROPEAN PATENT SPECIFICATION

(11) **EP 3 153 717 B1**
(45) Date of publication and mention of the grant of the patent: **16.03.2022**
(21) Application number: 16191302.5
(22) Date of filing: 29.09.2016
(51) Int. Cl.: F16B 12/20, A47B 91/02

(54) **DOUBLE JOINING DEVICE WITH LEVELLER FOR CENTRAL PANELS OF FURNITURE AND FURNISHING ITEMS**
DOPPEL HÖHENVERSTELLBARE VERBINDUNGSVORRICHTUNG FÜR ZENTRALE PANELEN FÜR MÖBELTEILEN UND MÖBELN.
DISPOSITIF D'ASSEMBLAGE DOUBLE RÉGLABLE EN HAUTEUR POUR PANNEAU CENTRALE EST DES PIÈCES DE MEUBLE ET DES ARTICLES D'AMEUBLEMENT

(30) Priority: 09.10.2015 IT UB20154264
(43) Date of publication of application: 12.04.2017
(73) Proprietor: Leonardo S.r.L., 22060 Figino Serenza (CO) (IT)
(72) Inventor: CATTANEO, Carlo, 22060 Figino Serenza (IT)
(74) Representative: Franco Martegani S.r.l.

(56) References cited:
- WO-A1-2009/056935
- CH-A5- 676 026
- US-B1- 6 547 477

## Description

The present invention relates to a double joining device with a leveller for central panels of furniture and furnishing items.

The joining between two panels, for example between a shoulder of a piece of furniture and a base, or in any case a shelf, is currently effected in the furniture and furnishing field using various procedures and with different solutions.

Examples of these solutions are known for example from patents US7494297, US5567081, US6547477 and US4408923.

For example, the document CH 676 026 discloses a furniture item with parts joined to each other by connecting fittings. Each of these comprises an oblong connector, fixed at one end in one of the parts. Its remaining portions are accommodated in the other part, a peripheral groove being formed in its end. A tapped tubular component contains a transverse passage accommodating the grooved part of the connector, and accommodates a clamping screw (30).

These known solutions have a certain complexity and in any case have a certain visibility, as they require closing elements of the seats or holes necessary for positioning the elements that effect the joining.

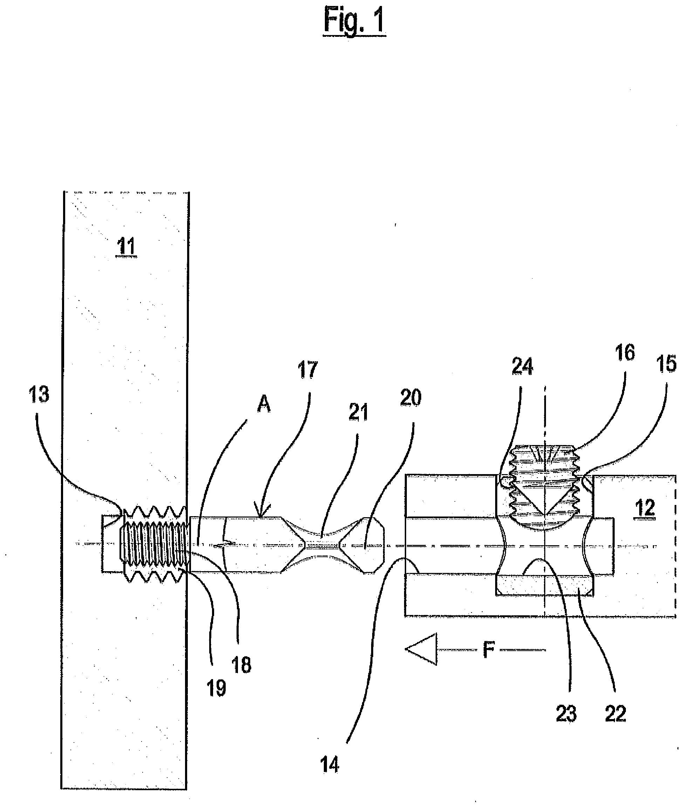

Much more simply, figures 1, 2 and 3 show a known solution of a joining device for parts of furniture and furnishing items, for example between a shoulder of a piece of furniture and a base, or in any case a shelf.

In the known solution illustrated, holes must be provided in both a shoulder 11 and a base 12 of a piece of furniture, both partially shown in a connection part of the same. The shoulder 11, in fact, provides a horizontal blind hole 13 and the base 12 even provides a double hole 14, 15. More specifically, a horizontal hole 14 to be aligned with the hole 13 of the shoulder 11, and a vertical hole 15, formed in the upper surface of the base 12, which intersects the first hole 14, for the insertion of a blocking element, for example a grub screw 16, wherein both holes are blind.

Said hole 13 has an axis A which is perpendicular to the shoulder 11.

This known joining device provides for the positioning of a pin 17 with a first threaded end 18 inside an internally threaded bush 19 positioned in the hole 13 of the shoulder 11. The pin 17 contains, at the other end 20, a housing 21 for an end of the grub screw 16.

A bush 22 is housed in the vertical hole 15 of the base 12, which provides a horizontal pass-through hole 23 for receiving the protruding end 20 of the pin 17 and a vertical threaded pass-through hole 24 which receives the grub screw 16.

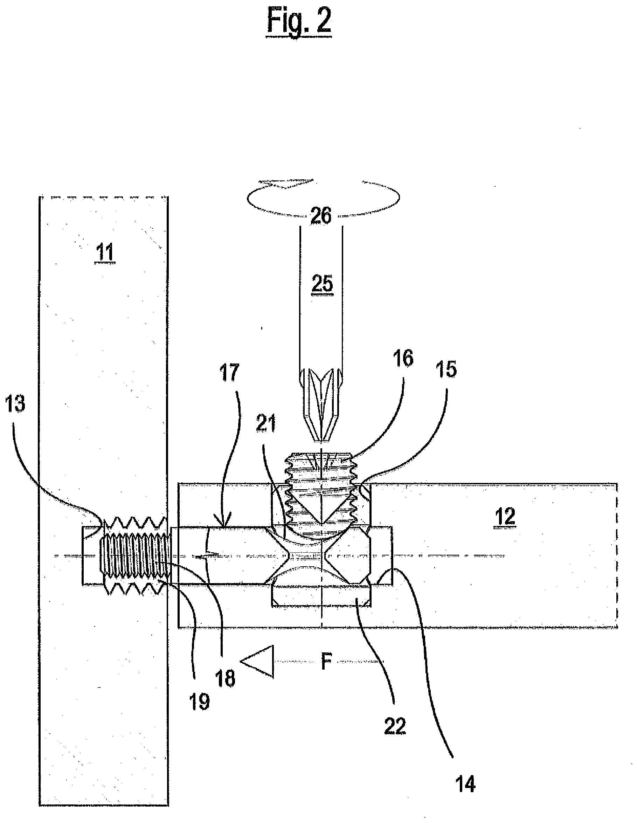

By thus positioning said elements forming the known joining device and juxtaposing the shoulder and the base according to the arrow F of figure 1, the coupling of figure 2 is obtained, with the pin 17 inserted in the hole 14 of the base 12 and in the bush 22.

The grub screw 16 is then screwed, with a tool 25, according to the arrow 26, into the bush 22 so that the tip of the grub screw 16 is positioned in the housing 21 provided at the free end 20 of the pin 17.

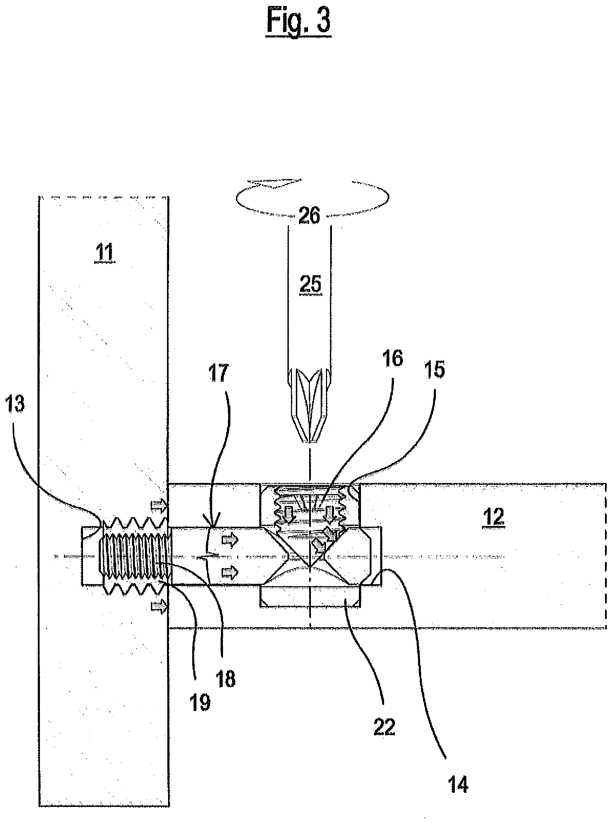

The tightening of the grub screw 16 pushes the base 12 against the shoulder 11 forming the final stable position shown in figure 3.

In this known solution, the blocking group is in the base, it is arranged perpendicular to the base and to the movement or approach direction and tightening between the shoulder and base. Only the pin, with which the blocking group cooperates, is provided in the thickness of the shoulder or side panel.

Said figure 3 indicates, by means of a series of arrows, the scheme of forces at play between the shoulder 11 and base 12 of the piece of furniture and between the parts of the joining device.

This final position also shows how the end of the hole 15 is present on the upper surface of the base 12, and is normally covered with a closing cap (not shown).

Said hole and the corresponding cap form a visible part of the joining device.

In the first place, this part does not have an aesthetically valid appearance as, although there is the presence of the cap, it shows how the joining has been effected. Furthermore, the cap itself, which is difficult to be brought specifically in line with the surface of the base, represents an obstacle for the insertion of any object, creating a protrusion, even if minimum, with respect to the upper surface of the base.

The presence of at least two holes in the base, moreover, intersecting each other, causes a weakening of the base itself that must sustain loads representing a possible cause of breakage.

Furthermore, when a panel is positioned in the centre between two shelves or bases or other panels as required, the holes are formed for each part and therefore the problems previously mentioned are doubled.

The general objective of the present invention is to provide a joining device between parts of furniture and furnishing items, such as a shoulder and a pair of bases positioned at opposite sides of the same, capable of solving the drawbacks mentioned above of the known art, in an extremely simple, economical and particularly functional manner.

A further objective of the present invention is to provide a joining device between parts of furniture and furnishing items, such as a shoulder and a pair of opposing bases, which is not visible to an observer and therefore has a high aesthetical value.

Another objective of the present invention is to provide a joining device between parts of furniture and furnishing items, such as a shoulder and a pair of opposing bases, which does not have any protrusion with respect to the upper surface of each base.

The structural and functional characteristics of the present invention are defined in the claims. The advantages with respect to the known art will appear more evident from the following description, referring to the enclosed schematic drawings which show embodiment examples of the same invention. In the drawings:
- figure 1 is a sectional view illustrating parts, spaced from each other, of a known joining device for parts of furniture and furnishing items, for example between a shoulder of a piece of furniture and a base or in any case a shelf;
- figures 2 and 3 are two sectional views of the known device of figure 1, wherein figure 2 shows said parts juxtaposed with respect to each other and partially inserted in each other and figure 3 shows said parts completely inserted in each other and tightened;
- figure 4 is a perspective view illustrating spaced parts of a joining device for parts of furniture and furnishing items of the invention, which can be positioned, for example, in a shoulder of a piece of furniture interposed between a pair of bases or shelves;
- figure 5 is a perspective view of the central part of the device of figure 4 with half of the casing exploded with respect to the other;
- figure 6 is a longitudinal sectional view of the device of figure 4, outlined in correspondence with a blocking group and a connection group, inserted in a central shoulder and in two bases or shelves, showing these parts juxtaposed, completely inserted in each other and tightened;
- figure 7 is a longitudinal sectional view of the device of figure 4, outlined in correspondence with a levelling group, inserted in a central shoulder and in two bases or shelves, showing these parts juxtaposed, completely inserted in each other and tightened;
- figures 8 and 9 are two transversal sectional views according to the lines VIII-VIII and IX-IX of figure 6 of the device of the invention of figure 4;
- figures 10, 11, 12, 13 and 14 show front and rear views, from above and below and to the side of the closed casing of the joining device of figures 4 and 5;
- figures 15a, 15b and 15c to 20a, 20b and 20c are examples of different holes in panels for the assembly of a joining device with a leveller for a central shoulder according to the invention.

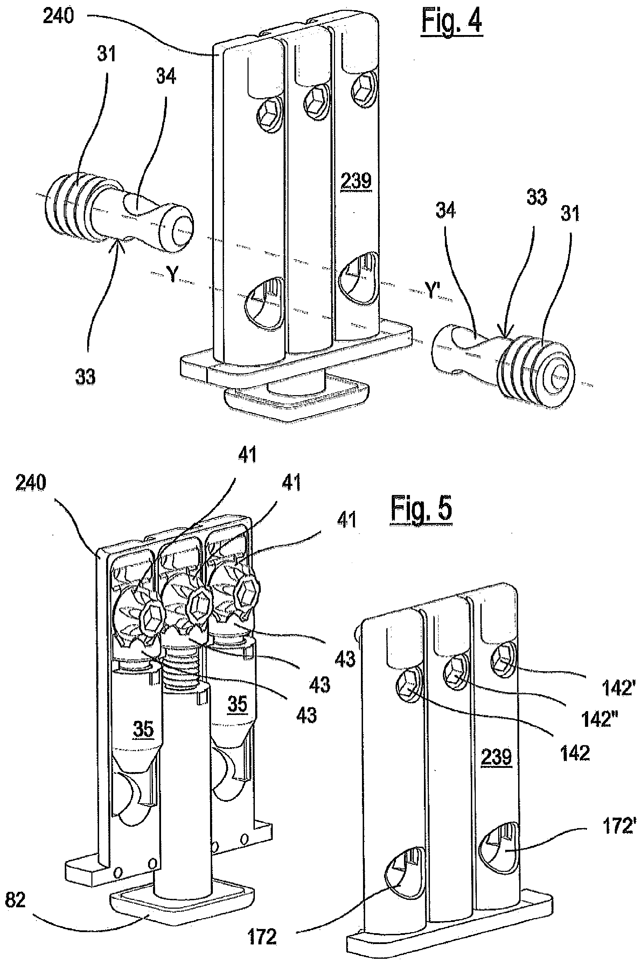

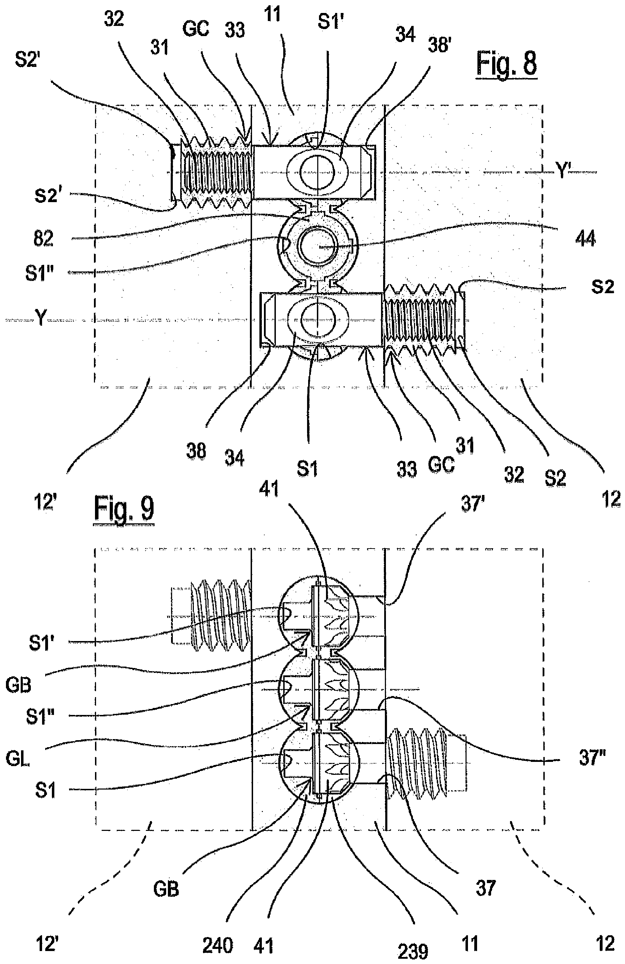

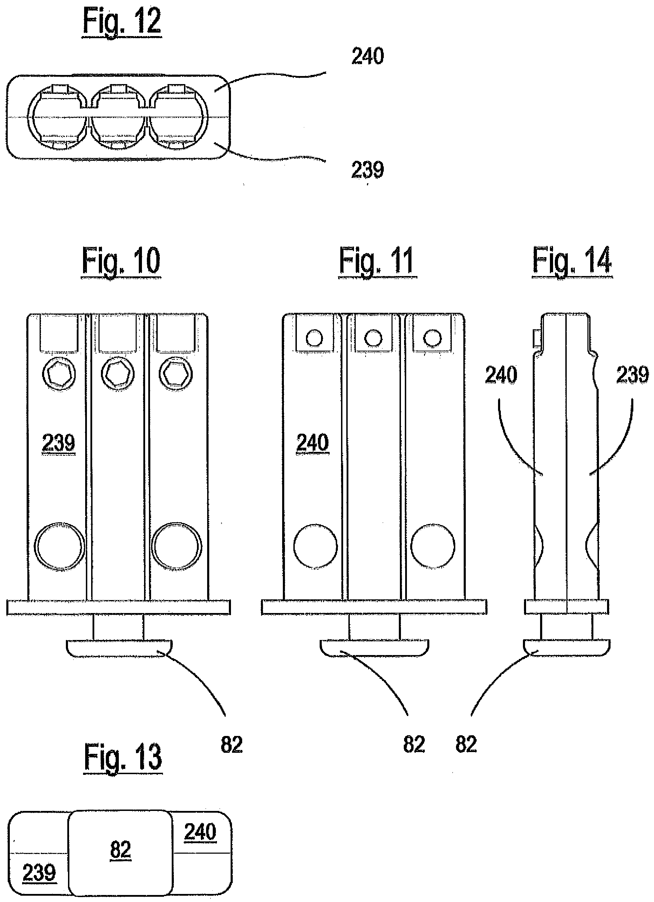

Figures 4 to 14 show an embodiment of a double joining device with a leveller for central panels of parts of furniture and furnishing items according to the invention.

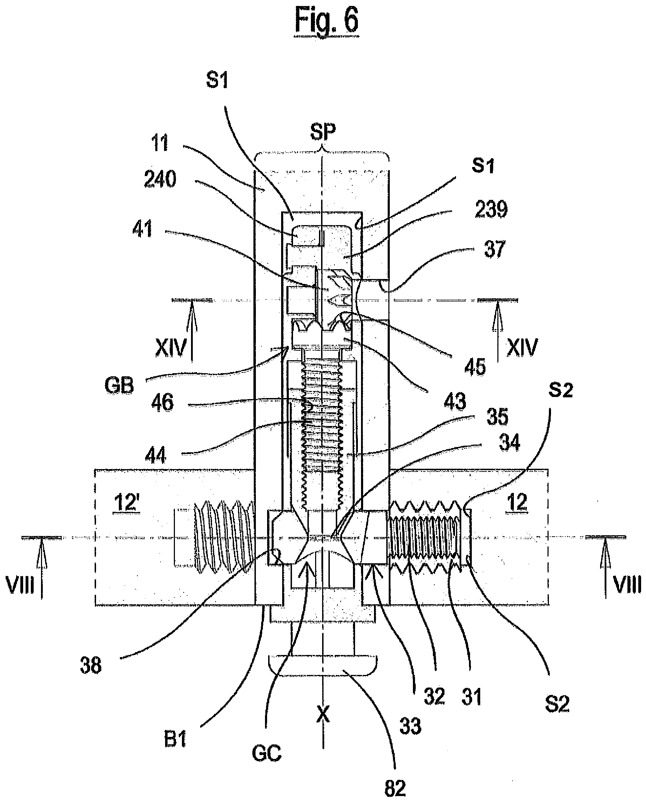

In order to highlight the features of the present invention, figures 4 to 7 will be first examined, which show an embodiment of a double joining device with a leveller for central panels of parts of furniture and furnishing items according to the invention. In the example, the joining device must connect and join a first panel 11, for example a shoulder of a piece of furniture and a pair of second panels 12, 12', for example a base or in any case a panel or shelf, partially shown in figures 6, 7, 8 and 9. As shown in these illustrative figures, the shoulder 11 and the bases or panels 12, 12' are generally perpendicular to each other but they may also be tilted with respect to each other. Furthermore, the two bases 12 and 12' are positioned on opposite sides with respect to the central shoulder 11 and must be firmly connected to the same.

Each of the bases 12, 12' contains, at one of its ends, a seat S2, S2' in the form of a horizontal blind hole in which an internally threaded bush 31 is positioned, blocked, for receiving a threaded end 32 of a pin 33.

The pin 33 provides, in its protruding part, a housing 34 for the tip of a blocking grub screw 35.

Said pin 33 defines a connection group GC to be firmly blocked for stably interconnecting said shoulder 11 and each of said bases 12, 12' as better explained hereunder.

It should also be pointed out that the seats S2, S2' in the form of blind holes are formed in the two bases 12, 12' according to the directions Y, Y' parallel to each other, adjacent but not aligned.

The shoulder 11 provides two seats S1, S1' - each for a blocking group GB - having a substantially elongated configuration, in the form of a double vertical blind hole which, for example, forms a double "eight-shaped" circular section. Each vertical hole or seat S1, S1' intersects a first and a second horizontal blind hole 37, 38, and 37', 38', respectively, spaced from each other as shown in figure 6.

Both of the seats S1, S1' characteristically extend from a perimetric edge B1 towards the interior of said shoulder or panel 11.

A pair of half-shells are housed in the pair of vertical holes or seats S1, S1', which, when assembled, form a triple cylindrical casing, with a transversal section in a "3 adjacent C" form. In particular, in the example shown, a first half-shell 240 is provided, and a second half-shell 239, both having a very similar form.

The half-shell 239 has, in its upper part, three holes 142, 142', 142" which must be aligned with the first horizontal holes 37, 37', 37" and, in its lower part, holes 172, 172' which must be aligned with the second horizontal holes 38, 38' of the shoulder 11.

In the example, the half-shell 240, with a transversal section in a "3 adjacent C" form, houses two grub screws 35 in the end parts facing outwards. Each grub screw 35 is caused to slide by means of a pinion-toothed crown bevel. A pinion 41 is in fact rotatingly positioned inside a hole 42 formed at least in one half-shell 240 which is aligned with the respective first horizontal hole 37, 37' of the shoulder 11. The pinion 41 is engaged with a toothed crown 43, formed as head of a threaded screw 44, and can rotate in a seat 45 formed in the two half-shells 240 and 239 when coupled. The threaded screw 44 is in turn positioned in a threaded axial hole 46 and inside the grub screw 35.

Said components 34, 41, 43, 44, 45, 46, define a respective blocking group GB, of two adjacent blocking groups spaced from each other due to the presence of a leveling group GL cooperating with the same. Each blocking group GB is suitable for acting on the respective connection group GC, which is also of two parallel connection groups GC, positioned on respective opposite panels or bases 12, 12', consisting of the pin 33, as explained hereunder.

A shaped tool (not shown) such as a hexagonal key, is suitable for being inserted in an inner complementary seat inside the pinion 41 of a first blocking group GB passing through the first hole 37. For the second blocking group GB, the tool is inserted from the other first hole 37' of the shoulder 11, so as to be coupled with the respective pinion 41 causing its rotation by actuating the second blocking group GB.

In each blocking group GB, the rotation of the pinion 41 in turn causes the rotation of the toothed crown 43 of the head of the threaded screw 44. The rotation of threaded screw 44 forces the downward movement of the respective grub screw 35.

It can thus be seen how, in this embodiment, the double joining device of the present invention essentially comprises a pair of adjacent blocking groups GB (34,41,43,44,45,46), spaced and inserted inside the seats S1, S1', formed adjacent and spaced in the shoulder 11. Each blocking group GB acts on a respective pin 33 connection group GC to be blocked, positioned inside a seat S2, S2' of each of the two bases 12 and 12' .

More generically, regardless of what is disclosed in this example, the invention provides that a pair of adjacent blocking groups GB be inserted inside two seats S1, S1', also adjacent, fully contained in the thickness of the shoulder SP or panel 11 as preferred. The longitudinal axis x of each seat S1, S1' or hole extends perpendicularly to the approach direction d or *d*' and tightening of the respective base 12 or 12' to the shoulder or central panel 11.

According to the present invention, a levelling group GL, cooperating with said two blocking groups GB mentioned above, is positioned in a seat S1" or hole.

In an embodiment example, said levelling group GL is positioned between said two blocking groups GB.

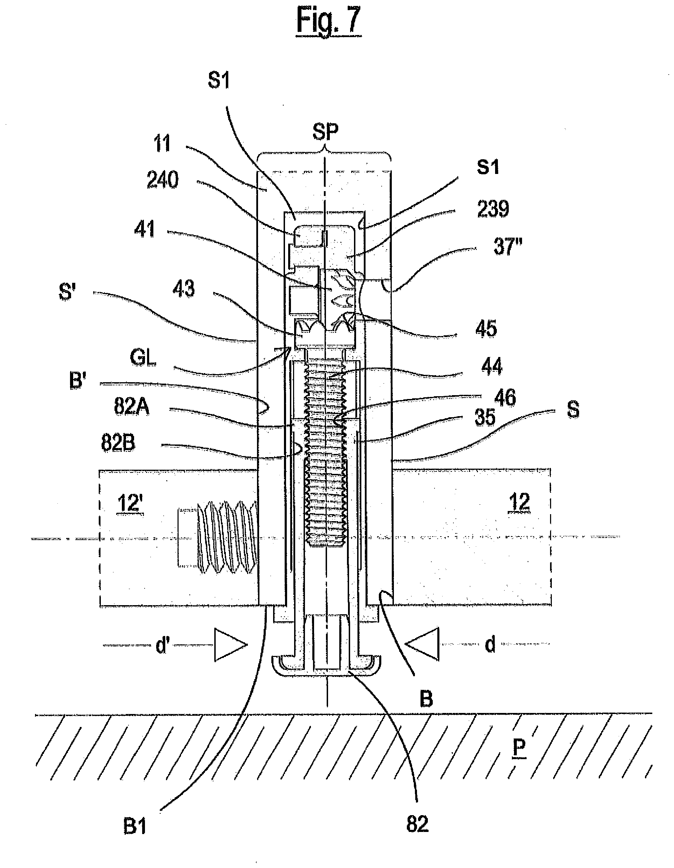

The levelling group GL also contains a pinion-toothed crown bevel. A pinion 41 is rotatingly positioned in the central part of the half-shells 239, 240 in a specific hole. This hole is aligned with a further first horizontal hole 37" (figure 7) formed in the shoulder 11 between the first two holes 37, 37' previously mentioned for the blocking group GB.

The pinion 41 is engaged with a toothed crown 43, formed as head of a threaded screw 44, and can rotate in a seat 45 produced in the two coupled half-shells 239 and 240. The threaded screw 44 is in turn positioned in a threaded axial hole 46 and inside a supporting leg 82 on a floor P.

The components 41,43,44,46,82 define the levelling group GL (figures 4 and 7) that cooperates, according to the invention, with both the blocking group GB and with the two connection groups GC.

The actuation of said levelling group GL is always effected by means of a tool (not shown) which, by passing through the first horizontal hole 37" formed in the shoulder 11, causes the pinion 41 to rotate and everything connected with the same as far as the leg 82.

The rotation of the threaded screw 44 forces the downward movement of the supporting leg 82 to reach the floor P, thanks to the cooperation with the threaded axial hole 46 inside the leg 82.

It should be pointed out that in order to effect the downward or upward movement of the leg, and not its contemporaneous rotation, specific anti-rotation means are provided.

In the example shown, the leg 82 is provided with blocking means 82A and 82B against rotation (anti-rotation form), which allow the translation of the same leg 82, preventing its rotation. The means 82A can consist, for example, of radial protrusions which are coupled inside corresponding seats 82B of the half-shells 239, 240.

In this way, an adjustment can be effected with respect to the floor P or other supporting plane.

In the example shown, the actuation of the two blocking groups GB and the interposed levelling group GL is effected in the same part of the casing.

Finally, figures from 15a, 15b, 15c to 20a, 20b, 20c are examples of different holes in panels 11, 12 and 12' to be connected by means of the joining device.

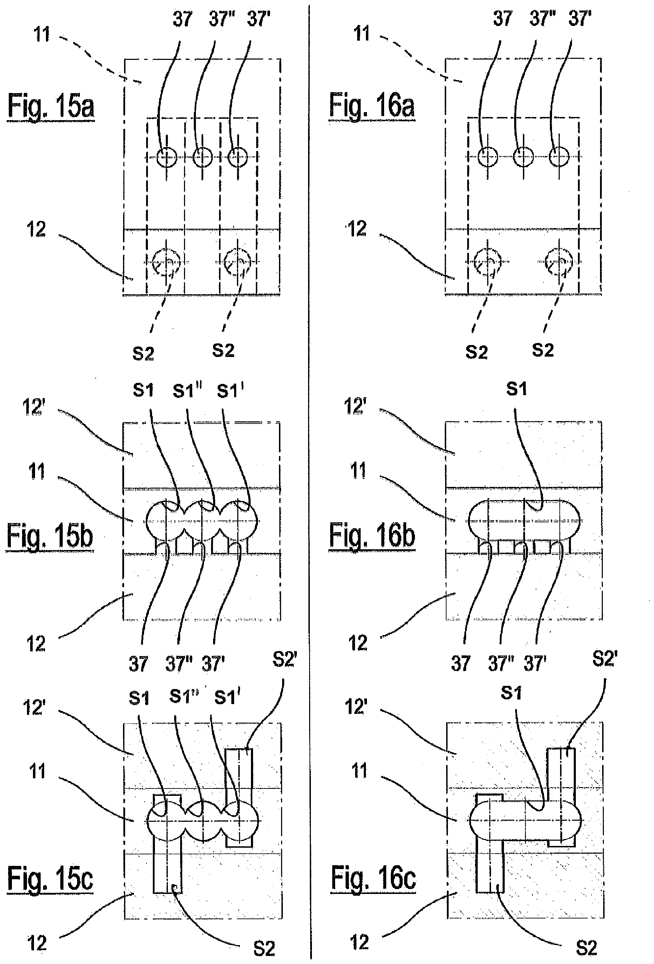

Figures 15a, 15b and 15c show how this hole consists of three circular holes or seats S1, S1', S" juxtaposed in the vertical panel or shoulder 11 for the assembly of a joining device with a leveller for a central panel or shoulder, according to the invention.

Figures 16a, 16b and 16c show how there is only one hole or seat S2 which has a rectangular section with rounded end portions connected to the three holes 37, 37', 37", spaced as in the previous example.

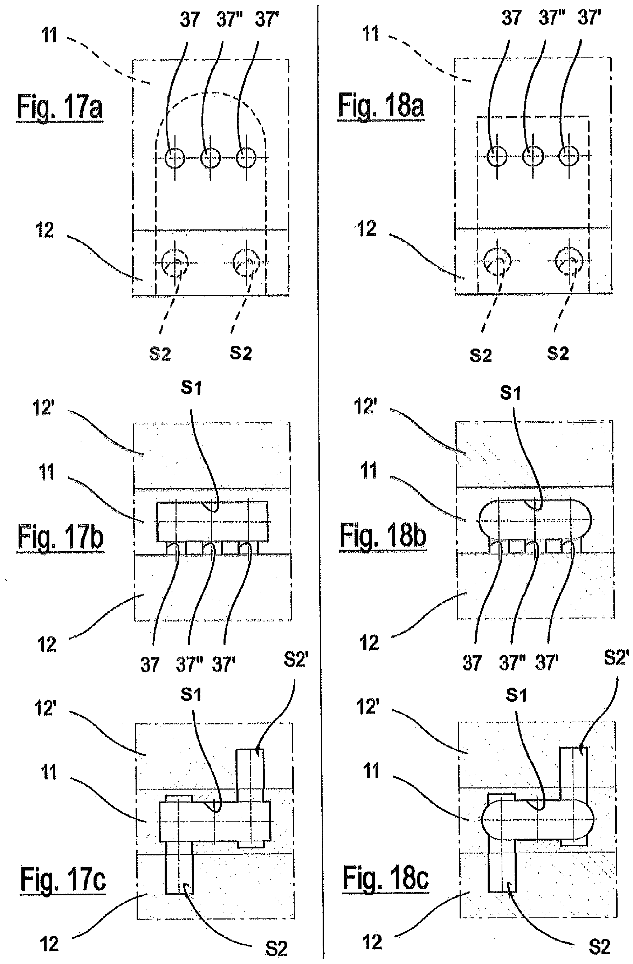

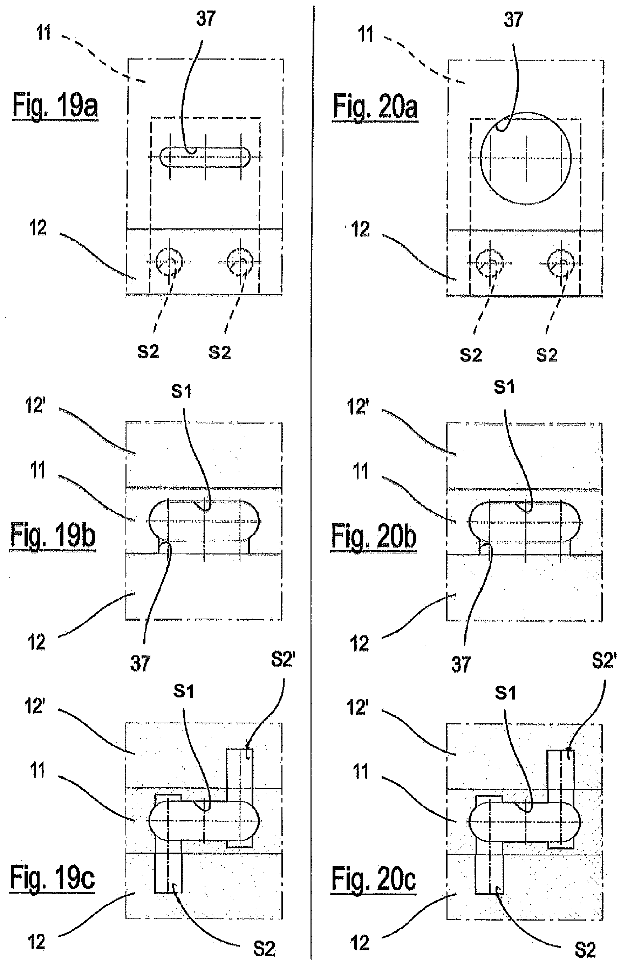

The subsequent figures 17a, 17b and 17c show a single hole or seat S2 with a rectangular section and rounded upper end. The three spaced holes 37, 37', 37" are always present. In figures 19a, 19b and 19c, a single hole 37 is present, connected to a single hole or seat S2 having a rectangular form with rounded ends.

Figures 20a, 20b and 20c show that there is a single circular hole 37 connected to a hole with a rectangular section having rounded ends.

A particularly robust joining device is thus obtained, positioned well hidden in the shoulder and in the two opposite bases, which first of all advantageously solves the problem relating to the visibility of the device. In this way, an aesthetically pleasing appearance is created of the piece of furniture in which it is used.

Furthermore, any possible caps positioned in the few holes present do not interfere with what is resting on each of the two bases of the furniture which is free of any type of hole.

In this way, there are no obstacles on the bases for the insertion of any object, eliminating any type of protrusion, even if minimum, with respect to the upper surface of the base.

Holes produced on the shoulder are not particularly visible to an observer with respect to holes on the base as in the known art, thus obtaining a high aesthetical value.

Finally, the elimination of holes that intersect with each other in each base eliminates any possible weakening of the base itself that can therefore sustain high loads without the danger of a possible cause of breakage of the base.

The half-shells are particularly simple to produce as they are almost symmetrical and identical to each other and can be obtained by moulding in only two pieces even if they contain two blocking groups and a central levelling group and are suitable for cooperating with two connection groups.

The forms of the structure for the production of a joining device of the present invention, as also the materials and assembly modes, can naturally differ from those shown for purely illustrative and non-limiting purposes in the drawings.

The objectives mentioned in the preamble of the description have therefore been achieved.

The protection scope of the present invention is defined by the enclosed claims.

## Claims

1. A double joining device suitable for a piece of furniture comprising at least three panels (11,12,12'), said panels having seats (S1,S1',S2,S2') and said joining device having a levelling group (GL) for central panels of furniture and furnishing items, in particular between a first panel (11), such as a shoulder of a piece of furniture, and a pair of second panels (12, 12'), such as a base or shelf of a piece of furniture, positioned on opposite sides of the first panel (11), which must be moved towards each other according to an approach direction (d,d') in order to bring the edge (B,B') of one panel abutted in a tightening position against a surface (S,S') of the other panel, said joining device comprising two blocking groups (GB) and one connection group (GC) assemblable on said panels (11,12), **characterized in that** said double joining device also comprises said levelling group (GL), said two blocking groups (GB) and also said levelling group (GL) being insertable inside a respective seat, adjacent and contained in the thickness (SP) of the panel (11) on which said blocking groups (GB) and said levelling group (GL) are applicable, said seats of the blocking groups (GB) and elling group (GL) having a longitudinal axis (X) which is perpendicular to said direction (d,d'); wherein each of said blocking groups (GB) and said levelling group (GL) can be actuated from a first hole (37,37',37") produced in said shoulder (11) and that each of said pin connection groups (GC) can be coupled with said shoulder (11) from a second hole (38,38') produced in said shoulder (11), said first and second holes (37,38; 37',38') being spaced from each other and horizontal, the double joining device further comprising a casing (239,240), wherein each blocking group (GB) comprises a pinion-toothed crown bevel (41,43), which is housed in said casing (239,240) positionable in a pair of holes or seats (S1, S1') of said shoulder (11) adjacent and spaced from said levelling group (GL), said pinion-toothed crown bevel (41,43) controlling the movement of a grub screw (35) suitable for being engaged on a respective pin group (33) of each of the two connection groups (GC); and wherein said levelling group (GL) comprises a pinion-toothed crown bevel (41,43), which is housed in said casing (239,240) positionable in said hole or seat (S1") of said shoulder (11) and which controls the movement of a supporting leg (82) suitable for being engaged on a floor (P).

2. The device according to claim 1, **characterized in that** seats (S1,S1') are provided, that extend from a perimetric edge (B1) towards the interior of said first panel (11).

3. The device according to claim 1, **characterized in that** the device is suitable for each of said second panels (12,12') receiving a connection group (GC) which collaborates with a respective blocking group (GB), seats (S2,S2') of said second panels (12,12') being positioned parallel to each other so as to collaborate with said blocking groups (GB) positioned adjacent in said first panel (11) .

4. The device according to claim 1, **characterized in that** each of said blocking groups (GB) is inserted inside a respective seat (S1,S1') which is contained in the thickness (SP) of the first panel (11), a further seat (S1") being positioned between the two seats (S1, S1') which contain said blocking groups (GB) and containing said levelling group (GL), a casing (239, 240) for said two blocking groups (GB) and said levelling group (GL) being positioned in said seats (S1, S1',S1").

5. The device according to claim 1, **characterized in that** it provides that each blocking group (GB) is positioned in a respective hole or seat (S1, S1') of said shoulder (11) and acts on a respective connection group (GC) to be blocked, situated in each of said two second panels or bases (12,12') and which extends from a hole or seat (S2, S2') produced laterally with respect to each base (12, 12').

6. The device according to claim 5, **characterized in that** said two blocking groups (GB) and said levelling group (GL) can be actuated from a same part of a casing (239,240) containing them.

7. The device according to claim 5, **characterized in that** said hole or seat (S1, S1') in said shoulder (11) is vertical.

8. The device according to claim 5, **characterized in that** said hole or seat (S2, S2') in said base (12,12') is horizontal.

9. The device according claim 1, **characterized in that** a toothed crown (43) of said bevel extends into a threaded screw (44), which in turn is positioned in a threaded hole (46) axial to and inside said grub screw (35) .

10. The device according to claim 9, **characterized in that** said pin group comprises a pin (33) that is positioned, in a threaded end (32), in an internally threaded bush (31), positioned in said hole or seat (S2, S2') of said base (12), said pin (33) providing, in its protruding part, a housing (34) for said grub screw (35).

11. The joining device according to one or more of the previous claims, **characterized in that** said casing comprises at least a pair of half-shells that form, when assembled, a triple casing for containing said two blocking groups (GB) and said levelling group (GL).

12. The device according claim 1, **characterized in that** said toothed crown (43) of said bevel extends into a threaded screw (44), which in turn is positioned in a threaded hole (46) axial to and inside said supporting leg (82) .

13. The device according claim 1, **characterized in that** said levelling group (GL) is positioned between said two blocking groups (GB).

## Patentansprüche

1. Doppelfügevorrichtung, die für ein Möbelstück geeignet ist, das mindestens drei Platten (11, 12, 12') umfasst, wobei die Platten Sitze (S1, S1', S2, S2') aufweisen und die Fügevorrichtung eine Nivelliergruppe (GL) für zentrale Platten von Möbeln und Einrichtungsgegenständen insbesondere zwischen einer ersten Platte (11), wie einer Schulter eines Möbelstücks, und einem Paar von zweiten Platten (12, 12'), wie einer Basis oder einem Bord eines Möbelstücks, aufweist, die auf gegenüberliegenden Seiten der ersten Platte (11) angeordnet sind, die gemäß einer Annäherungsrichtung (d, d') aufeinander zu bewegt werden müssen, um den Rand (B, B') einer Platte in einer Spannposition anliegend gegen eine Oberfläche (S, S') der anderen Platte zu bringen, wobei die Fügevorrichtung zwei Blockiergruppen (GB) und eine Verbindungsgruppe (GC) umfasst, die an den Platten (11, 12) montierbar sind, **dadurch gekennzeichnet, dass** die Doppelfügevorrichtung auch die Nivelliergruppe (GL) umfasst,
wobei die beiden Blockiergruppen (GB) und auch die Nivelliergruppe (GL) in einen jeweiligen Sitz einsetzbar sind, der der Dicke (SP) der Platte (11) benachbart und in dieser enthalten ist, an der die Blockiergruppen (GB) und die Nivelliergruppe (GL) anwendbar sind, wobei die Sitze der Blockiergruppen (GB) und der Nivelliergruppe (GL) eine Längsachse (X) haben, die senkrecht zu der Richtung (d, d') verläuft);
wobei jede der Blockiergruppen (GB) und der Nivelliergruppe (GL) von einem ersten Loch (37, 37', 37") aus betätigt werden kann, das in der Schulter (11) ausgebildet ist, und dass jede der Stift-Verbindungsgruppen (GC) mit der Schulter (11) von einem zweiten Loch (38, 38') aus gekoppelt werden kann, das in der Schulter (11) ausgebildet ist, wobei das erste und das zweite Loch (37, 38; 37', 38') voneinander beabstandet und horizontal sind, wobei die Doppelfügevorrichtung ferner ein Gehäuse (239, 240) aufweist, wobei jede Blockiergruppe (GB) ein Ritzel-Zahnkranz-Kegelrad (41, 43) umfasst, das in dem Gehäuse (239, 240) untergebracht ist, das in einem Paar von Löchern oder Sitzen (S1, S1') der Schulter (11) benachbart und beabstandet von der Nivelliergruppe (GL) positionierbar ist, wobei das Ritzel-Zahnkranz-Kegelrad (41, 43) die Bewegung einer Madenschraube (35) steuert, die geeignet ist, mit einer entsprechenden Stiftgruppe (33) jeder der beiden Verbindungsgruppen (GC) in Eingriff zu treten; und
wobei die Nivelliergruppe (GL) ein Ritzel-Zahnkranz-Kegelrad (41, 43) umfasst, das in dem Gehäuse (239, 240) untergebracht ist, in dem Loch oder Sitz (S1") der Schulter (11) positionierbar ist und das die Bewegung eines Stützschenkels (82) steuert, der geeignet ist, mit einem Boden (P) in Eingriff zu stehen.

2. Vorrichtung nach Anspruch 1, **dadurch gekennzeichnet, dass** Sitze (S1, S1') vorgesehen sind, die sich von einem Umfangsrand (B1) in das Innere der ersten Platte (11) erstrecken.

3. Vorrichtung nach Anspruch 1, **dadurch gekennzeichnet, dass** die Vorrichtung dazu geeignet ist, dass jede der zweiten Platten (12, 12') eine Verbindungsgruppe (GC) aufnimmt, die mit einer entsprechenden Blockiergruppe (GB) zusammenwirkt, wobei die Sitze (S2, S2') der zweiten Platten (12, 12') parallel zueinander angeordnet sind, um mit den Blockiergruppen (GB) zusammenzuwirken, die in der ersten Platte (11) benachbart angeordnet sind.

4. Vorrichtung nach Anspruch 1, **dadurch gekennzeichnet, dass** jede der Blockiergruppen (GB) in einen entsprechenden Sitz (S1, S1') eingesetzt ist, der in der Dicke (SP) der ersten Platte (11) enthalten ist, wobei ein weiterer Sitz (S1") zwischen den beiden Sitzen (S1, S1') angeordnet ist, die die Blockiergruppen (GB) enthalten und die Nivelliergruppe (GL) enthalten, wobei ein Gehäuse (239, 240) für die beiden Blockiergruppen (GB) und die Nivelliergruppe (GL) in den Sitzen (S1, S1', S1") angeordnet ist.

5. Vorrichtung nach Anspruch 1, **dadurch gekennzeichnet, dass** sie vorsieht, dass jede Blockiergruppe (GB) in einem jeweiligen Loch oder Sitz (S1, S1') der Schulter (11) positioniert ist und auf eine jeweilige zu blockierende Verbindungsgruppe (GC) einwirkt, die sich in jeder der beiden zweiten Platten oder Basen (12, 12') befindet und die sich von einem Loch oder Sitz (S2, S2') aus erstreckt, der seitlich in Bezug auf jede Basis (12, 12') hergestellt ist).

6. Vorrichtung nach Anspruch 5, **dadurch gekennzeichnet, dass** die beiden Blockiergruppen (GB) und die Nivelliergruppe (GL) von einem gleichen Teil eines sie enthaltenden Gehäuses (239, 240) aus betätigt werden können.

7. Vorrichtung nach Anspruch 5, **dadurch gekennzeichnet, dass** das Loch oder der Sitz (S1, S1') in der Schulter (11) vertikal ist.

8. Vorrichtung nach Anspruch 5, **dadurch gekennzeichnet, dass** das Loch oder der Sitz (S2, S2') in der Basis (12, 12') horizontal ist.

9. Vorrichtung nach Anspruch 1, **dadurch gekennzeichnet, dass** sich ein Zahnkranz (43) des Kegelrads in eine Gewindeschraube (44) erstreckt, die ihrerseits in einer Gewindebohrung (46) axial zu und innerhalb der Madenschraube (35) angeordnet ist.

10. Vorrichtung nach Anspruch 9, **dadurch gekennzeichnet, dass** die Stiftgruppe einen Stift (33) umfasst, der mit einem Gewindeende (32) in einer Innengewindebuchse (31) positioniert ist, die sich in dem Loch oder Sitz (S2, S2') der Basis (12) befindet, wobei der Stift (33) in seinem vorstehenden Teil ein Gehäuse (34) für die Madenschraube (35) bildet.

11. Fügevorrichtung nach einem der vorhergehenden Ansprüche, **dadurch gekennzeichnet, dass** das Gehäuse mindestens ein Paar von Halbschalen umfasst, die im zusammengebauten Zustand ein Dreifachgehäuse zur Aufnahme der beiden Blockiergruppen (GB) und der Nivelliergruppe (GL) bilden.

12. Vorrichtung nach Anspruch 1, **dadurch gekennzeichnet, dass** der Zahnkranz (43) des Kegelrads sich in eine Gewindeschraube (44) erstreckt, die ihrerseits in einer Gewindebohrung (46) axial zum und innerhalb des Stützschenkels (82) angeordnet ist.

13. Vorrichtung nach Anspruch 1, **dadurch gekennzeichnet, dass** die Nivelliergruppe (GL) zwischen den beiden Blockiergruppen (GB) angeordnet ist.

## Revendications

1. Dispositif de double liaison adapté à un meuble comprenant au moins trois panneaux (11, 12, 12'), lesdits panneaux ayant des sièges (S1, S1', S2, S2') et ledit dispositif de liaison ayant un groupe de mise à niveau (GL) pour des panneaux centraux de meubles et d'articles d'ameublement, notamment entre un premier panneau (11), tel qu'un épaulement d'un meuble, et une paire de deuxièmes panneaux (12, 12'), tels qu'un socle ou une étagère d'un meuble, positionnés de part et d'autre du premier panneau (11), qui doivent être rapprochés l'un de l'autre selon une direction d'approche (d, d') afin d'amener le bord (B, B') d'un panneau en butée dans une position de serrage contre une surface (S, S') de l'autre panneau, ledit dispositif de liaison comprenant deux groupes de blocage (GB) et un groupe de connexion (GC) assemblables sur lesdits panneaux (11, 12), **caractérisé en ce que** ledit dispositif de double liaison comprend également ledit groupe de mise à niveau (GL), lesdits deux groupes de blocage (GB) et également ledit groupe de mise à niveau (GL) étant insérables à l'intérieur d'un siège respectif, adjacent et contenu dans l'épaisseur (SP) du panneau (11) sur lequel lesdits groupes de blocage (GB) et ledit groupe de mise à niveau (GL) sont applicables,
lesdits sièges des groupes de blocage (GB) et du groupe de mise à niveau (GL) ayant un axe longitudinal (X) qui est perpendiculaire à ladite direction (d, d') ;
dans lequel chacun desdits groupes de blocage (GB) et ledit groupe de mise à niveau (GL) peuvent être actionnés à partir d'un premier trou (37, 37', 37") produit dans ledit épaulement (11) et **en ce que** chacun desdits groupes de connexion à broche (GC) peut être couplé audit épaulement (11) à partir d'un deuxième trou (38, 38') produit dans ledit épaulement (11), lesdits premier et deuxième trous (37, 38 ; 37', 38') étant espacés l'un de l'autre et horizontaux, le dispositif de double liaison comprenant en outre un boîtier (239, 240),
dans lequel chaque groupe de blocage (GB) comprend un chanfrein de couronne à denture de pignon (41, 43), qui est logé dans ledit boîtier (239, 240) positionnable dans une paire de trous ou sièges (S1, S1') dudit épaulement (11) adjacents à et espacés dudit groupe de mise à niveau (GL), ledit chanfrein de couronne à denture de pignon (41, 43) commandant le mouvement d'une vis sans tête (35) apte à venir en prise sur un groupe de broche respectif (33) de chacun des deux groupes de liaison (GC); et
dans lequel ledit groupe de mise à niveau (GL) comprend un chanfrein de couronne dentée de pignon (41, 43), qui est logé dans ledit boîtier (239, 240) positionnable dans ledit trou ou siège (S1") dudit épaulement (11) et qui commande le mouvement d'une patte d'appui (82) apte à venir en prise sur un plancher (P).

2. Dispositif selon la revendication 1, **caractérisé en ce que** des sièges (S1, S1') sont prévus, lesquels s'étendent depuis un bord périphérique (B1) vers l'intérieur dudit premier panneau (11).

3. Dispositif selon la revendication 1, **caractérisé en ce que** le dispositif est adapté pour chacun desdits deuxièmes panneaux (12, 12') recevant un groupe de connexion (GC) qui coopère avec un groupe de blocage (GB) respectif, les sièges (S2, S2') desdits deuxièmes panneaux (12, 12') étant positionnés parallèlement les uns aux autres de manière à coopérer avec lesdits groupes de blocage (GB) positionnés adjacents dans ledit premier panneau (11).

4. Dispositif selon la revendication 1, **caractérisé en ce que** chacun desdits groupes de blocage (GB) est inséré à l'intérieur d'un siège respectif (S1, S1') qui est contenu dans l'épaisseur (SP) du premier panneau (11), un autre siège (S1") étant positionné entre les deux sièges (S1, S1') qui contiennent lesdits groupes de blocage (GB) et contenant ledit groupe de mise à niveau (GL), un boîtier (239, 240) pour lesdits deux groupes de blocage (GB) et ledit un groupe de mise à niveau (GL) étant positionné dans lesdits sièges (S1, S1', S1").

5. Dispositif selon la revendication 1, **caractérisé en ce qu'**il permet que chaque groupe de blocage (GB) soit positionné dans un trou ou siège respectif (S1, S1') dudit épaulement (11) et agisse sur un groupe de connexion (GC) respectif pour être bloqué, situé dans chacun desdits deux deuxièmes panneaux ou bases (12, 12') et qui s'étend à partir d'un trou ou siège (S2, S2') produit latéralement par rapport à chaque base (12, 12').

6. Dispositif selon la revendication 5, **caractérisé en ce que** lesdits deux groupes de blocage (GB) et ledit groupe de mise à niveau (GL) peuvent être actionnés à partir d'une même partie d'un boîtier (239, 240) les contenant.

7. Dispositif selon la revendication 5, **caractérisé en ce que** ledit trou ou siège (S1, S1') dans ledit épaulement (11) est vertical.

8. Procédé selon la revendication 5, **caractérisé en ce que** ledit trou ou siège (S2, S2') dans ladite base (12, 12') est horizontal.

9. Dispositif selon la revendication 1, **caractérisé en ce qu'**une couronne dentée (43) dudit chanfrein se prolonge dans une vis filetée (44), qui à son tour est positionnée dans un trou taraudé (46) axial à et à l'intérieur de ladite vis sans tête (35).

10. Procédé selon la revendication 9, **caractérisé en ce que** ledit groupe de broches comprend une broche (33) qui est positionnée, dans une extrémité filetée (32), dans une douille taraudée à l'intérieur (31), positionnée dans ledit trou ou siège (S2, S2') de ladite base (12), ladite broche (33) fournissant, dans sa partie saillante, un logement (34) pour ladite vis sans tête (35).

11. Dispositif de liaison selon l'une ou plusieurs des revendications précédentes, **caractérisé en ce que** ledit boîtier comprend au moins une paire de demi-coques qui forment, une fois assemblées, un boîtier triple destiné à contenir lesdits deux groupes de blocage (GB) et ledit groupe de mise à niveau (GL).

12. Dispositif selon la revendication 1, **caractérisé en ce que** ladite couronne dentée (43) dudit chanfrein se prolonge dans une vis filetée (44), qui à son tour est positionnée dans un trou taraudé (46) axial à et à l'intérieur de ladite patte de support (82).

13. Dispositif selon la revendication 1, **caractérisé en ce que** ledit groupe de mise à niveau (GL) est positionné entre lesdits deux groupes de blocage (GB).
